# EUROPEAN PATENT APPLICATION

(11) **EP 1 965 063 A1**
(43) Date of publication of application: **03.09.2008**
(21) Application number: 08156321.5
(22) Date of filing: 03.03.2000
(51) Int. Cl.: F02D 41/06, F02D 41/40

(54) **Method of controlling fuel combustion in a diesel engine by performing multiple injections by means of a common-rail fuel injection system**

(30) Priority: 05.03.1999 IT TO990172
(62) Divisional of application: 00104651.5
(71) Applicant: C.R.F. SOCIETÀ CONSORTILE PER AZIONI, 10043 Orbassano (Torino) (IT)
(72) Inventor: Buratti, Riccardo, 16129, Genova (IT); Tonetti, Marco, 10138, Torino (IT)
(74) Representative: Jorio, Paolo

(57) **Abstract**

Disclosed herein is a method of controlling operation of a diesel engine (2) in at least one of the following engine operating conditions start-up to reduce engine start-up time and misfiring; warm-up or pickup to reduce combustion noise instabilities; and high-torque and low-speed to reduce combustion noise and increase engine torque; the diesel engine (2) being equipped with a common-rail fuel injection system (1) operable to perform multiple fuel injections into each engine cylinder (4); the method comprising performing into an engine cylinder a main fuel injection (MAIN1; MAIN2) around an engine end-of-compression top dead center; a first fuel pre-injection (PRE; MAIN1) before and so close to the main fuel injection (MAIN1; MAIN2) that the fuel injected during the first fuel pre-injection (PRE; MAIN1) takes part in the combustion of the fuel injected during the main fuel injection (MAIN1; MAIN2); and a second fuel pre-injection (PILOT; PRE) before the first fuel pre-injection (PRE; MAIN1).

## Description

The present invention relates to a method of controlling fuel combustion in a diesel engine by performing multiple injections by means of a common-rail fuel injection system.

As is known, to reduce air and noise pollution, many countries are issuing increasingly strict standards governing pollutant and noise emissions of vehicle internal combustion engines.

As regards air pollution caused by diesel engines, the main problems arise from the presence, in the exhaust gas, of nitric oxides (NOx), particulate matter, carbon monoxides (CO) and hydrocarbons (HC). Nitric oxides, in particular, are currently held responsible for a high degree of pollution by contributing in the formation and increase in the so-called "ozone gap", and by forming, in the presence of sunlight, aggressive products which are both harmful to human beings (eye and skin ailments) and damage various types of material.

To reduce the pollutant emissions of internal combustion engines, in particular nitric oxides, various systems have been proposed, but which have failed to give the desired results.

Some of these employ a DeNox catalyst in conjunction with a post-injection of diesel fuel after the main injection, so that the unburnt diesel fuel mixes with the exhaust gas and participates in the reaction catalyzed by the DeNox catalyst to improve the efficiency of the catalyst.

Such a system, however, simply provides for more effectively reducing nitric oxides, and has no effect whatsoever in reducing other pollutant substances or noise emissions of internal combustion engines.

Other systems which employ an auxiliary injection are known from WO-9711269, EP-A-0 534 491 and EP-A-0 621 400.

In particular, WO-9711269 discloses performing a main injection at about 20° before TDC and having a duration of 40°, a pre-injection prior to main injection at about -50° before TDC and having a duration of a few degrees, and a post-injection after the main injection in the range between 100° and 270° after TDC.

EP-A-0 534 491 discloses performing a pre-jet of fuel which is injected and ignited prior to the main jet to develop an easily ignitable, activated condition in the combustion chamber. The injected pre-jet of fuel is mixed with the air in the combustion chamber in the compression stroke, causing an oxidizing reaction, called cold flame reaction, which activates the atmosphere in the combustion chamber and slightly increases the pressure in the combustion chamber. The subsequently injected main jet of fuel can thus be easily ignited by the activated condition in the combustion chamber and the engine can therefore be started quickly and smoothly without fail.

Finally, EP-A-0 621 400 discloses performing a primary injection and a secondary or additional injection following with a time interval the end of the primary injection. The additional injection may be either an early or a late supplementary injection. The early supplementary injection begins in the region of the end phase of the combustion of the primary injection, namely at about 20° and 80° after TDC and the late supplementary injection begins in the region between 80° and 180° after TDC.

Alongside the problem of reducing pollution caused by pollutant and noise emissions of internal combustion engines, a strong demand also exists for internal combustion engines of increasingly greater efficiency and performance, and increasingly lower fuel consumption.

It is an object of the present invention to provide a fuel combustion control method for reducing the pollutant emissions and combustion noise, while at the same time improving the efficiency, performance and fuel consumption of diesel engines.

According to the present invention, there is provided a method of controlling operation of a diesel engine featuring a common-rail fuel injection system, as defined in the appended claims.

A preferred, non-limiting embodiment of the present invention will be described by way of example with reference to the accompanying drawings, in which:
- Figure 1 shows, schematically, a diesel engine common-rail injection system;
- Figure 2 shows a first injection strategy in accordance with the present invention;
- Figure 3 shows further injection strategies in accordance with the present invention.

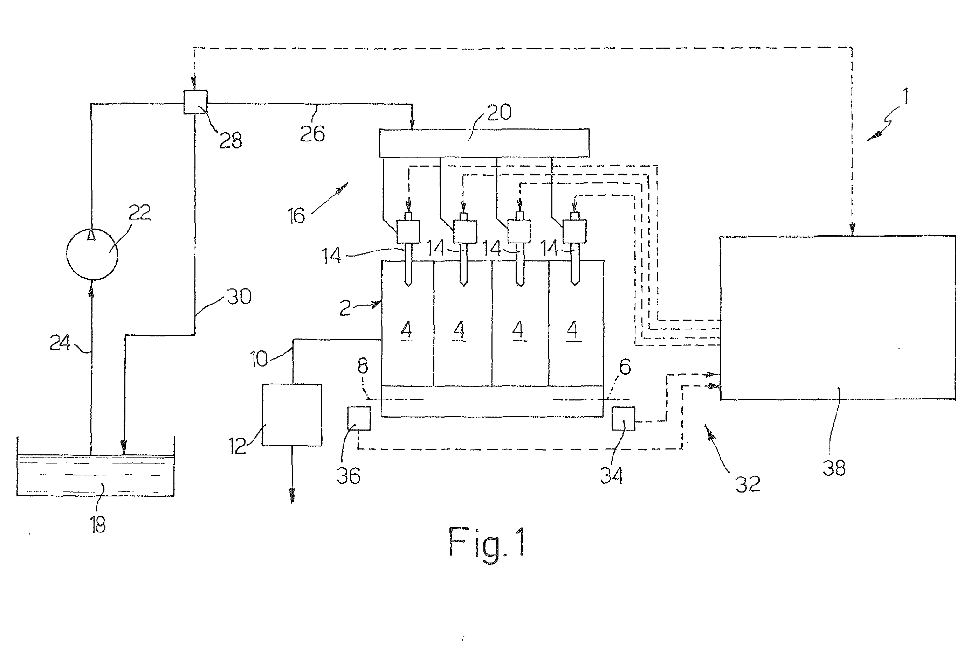

Number 1 in Figure 1 indicates a common-rail fuel injection system of a direct-injection diesel engine 2 comprising a number of cylinders 4; a drive shaft 6 and camshaft 8 (shown schematically by dot-and-dash lines); an exhaust pipe 10 for the combustion products; and a DeNox catalyst 12 along exhaust pipe 10.

The common-rail fuel injection system 1 comprises a number of injectors 14 - one for each cylinder 4 of engine 2 - for delivering fuel to cylinders 4 of engine 2; and a common-rail fuel supply circuit 16 for delivering fuel to injectors 14.

The common-rail fuel supply circuit 16 comprises a fuel (diesel fuel) tank 18; a common rail 20 for high-pressure fuel, connected to injectors 14; a high-pressure feed pump 22 connected to tank 18 by a low-pressure feed line 24, and to common rail 20 by a high-pressure feed line 26; a pressure regulator 28 along high-pressure feed line 26; and a low-pressure fuel return line 30 connected between pressure regulator 28 and tank 18.

The common-rail fuel injection system 1 further comprises a fuel injection control system 32 in turn comprising a first position sensor 34 located on drive shaft 6 and generating a first position signal indicating the angular position of drive shaft 6 (engine angle); a second position sensor 36 located on camshaft 8 and generating a second position signal indicating the angular position of camshaft 8; and a central control unit 38 connected to position sensors 34, 36 and generating output signals for driving pressure regulator 28 and injectors 14 to effect a given injection strategy at each engine cycle and in each cylinder 4 of engine 2.

The central control unit 38 can perform numerous fuel injection strategies, which provide for performing multiple fuel injections at each engine cycle and in each cylinder 4 of engine 2.

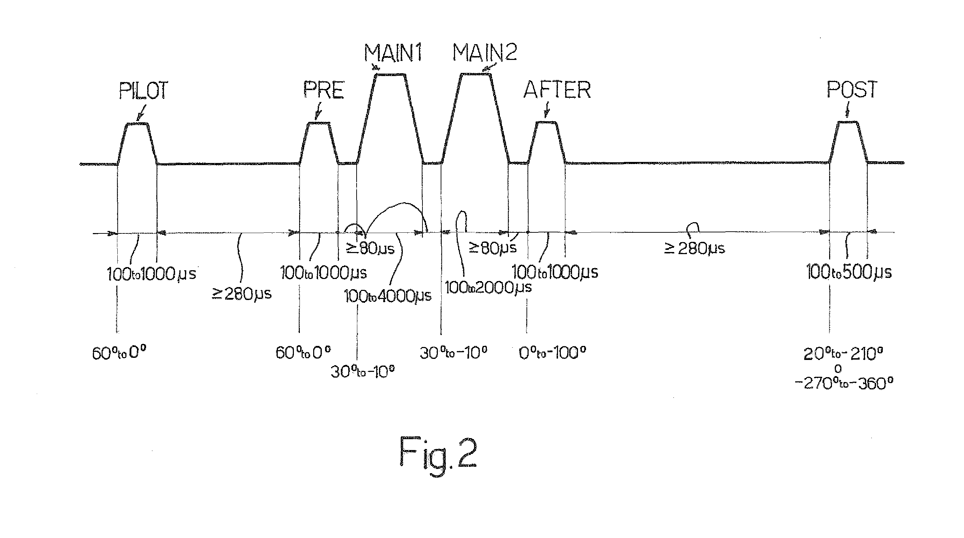

Figure 2, for example, shows six of the multiple fuel injections, and the time relationship between them, performable consecutively by central control unit 38 at each engine cycle and in each cylinder 4 of engine 2.

As shown in Figure 2, central control unit 38 can perform two close main fuel injections indicated MAIN1 and MAIN2; two fuel pre-injections preceding the main fuel injections and indicated PILOT and PRE; and two fuel post-injections following the main fuel injections and indicated AFTER and POST.

More specifically:
- the two main fuel injections MAIN1, MAIN2 are performed around the end-of-compression top dead center position, i.e. for engine angles within a range across the end portion of the compression stroke and the initial portion of the expansion stroke;
- the fuel preinjection PRE is performed close enough to the main fuel injections MAIN1, MAIN2 to take part in the combustion of the fuel injected during the main fuel injections;
- the fuel pre-injection PILOT is performed further away from the main fuel injections MAIN1, MAIN2 and is performed during the compression stroke;
- the fuel post-injection AFTER is performed close enough to the main fuel injections MAIN1, MAIN2 to take part in the combustion of the fuel injected during the main fuel injections and the fuel pre-injection PRE; and
- the fuel post-injection POST is performed further away from the main fuel injections MAIN1, MAIN2 and is performed during the exhaust stroke or at the end of the expansion stroke.

More specifically, the first main fuel injection MAIN1 lasts from 100 to 4000 µs, and starts at an engine angle ranging between 30° before and 10° after the top dead center, and which is mainly a function of the engine speed, load and cooling water temperature.

The second main fuel injection MAIN2 lasts from 100 to 2000 µs, and is performed after the first main fuel injection MAIN1 with the following timing characteristics:
- the second main fuel injection MAIN2 starts at an engine angle ranging between 30° before and 10° after the top dead center; and
- the second main fuel injection MAIN2 starts at least 80 µs after the end of first main fuel injection MAIN1.

The first fuel post-injection AFTER lasts from 100 to 1000 µs, and is performed after the second main fuel injection MAIN2 with the following timing characteristics:
- the first fuel post-injection AFTER starts at an engine angle ranging between 0° (i.e. the top dead center) and 100° after the top dead center; and
- the first fuel post-injection AFTER starts at least 80 µs after the end of the second main fuel injection MAIN2.

The second fuel post-injection POST lasts from 100 to 500 µs, and is performed after the first fuel post-injection AFTER with the following timing characteristics:
- the second fuel post-injection POST starts at an engine angle ranging between 20° before and 210° after the top dead center, or between 270° and 360° after the top dead center; and
- the second fuel post-injection POST starts at least 280 µs after the end of the first fuel post-injection AFTER.

The first fuel pre-injection PILOT lasts from 100 to 1000 µs, and is performed before the second fuel pre-injection PRE with the following timing characteristics:
- the first fuel pre-injection PILOT starts at an engine angle ranging between 60° before the top dead center and 0° (i.e. the top dead center); and
- the first fuel pre-injection PILOT ends at least 280 µs before the start of the second fuel pre-injection PRE.

The second fuel pre-injection PRE lasts from 100 to 1000 µs, and is performed after the first fuel pre-injection PILOT and before the first main fuel injection MAIN1 with the following timing characteristics:
- the second fuel pre-injection PRE starts at an engine angle ranging between 60° before the top dead center and 0° (i.e. the top dead center); and
- the second fuel pre-injection PRE ends at least 80 µs before the start of the first main fuel injection MAIN1.

The above fuel injection times are memorized in central control unit 38, which, to perform the above multiple fuel injections, first calculates the start and the end engine angles of the first main fuel injection MAIN1 as a function of the engine speed, load and cooling water temperature, and then, using the memorized times, determines the start and the end engine angles of each of the other fuel injections.

Each of the above fuel injections has a specific effect on the engine operation for a specific purpose.

In particular:
- performing two main fuel injections MAIN1 and MAIN2, as opposed to the usual single main fuel injection, reduces the temperature peaks, and hence the amount of nitric oxides NOx, generated during the fuel combustion;
- the fuel post-injection AFTER - which, as stated, takes part in the combustion of the fuel injected during the main fuel injections - provides for post-oxidizing the exhaust gas in the cylinders and so reducing the amount of particulate matter generated during the fuel combustion;
- the fuel post-injection POST provides for injecting fuel during the exhaust stroke; which fuel, given that the combustion of the fuel injected during the main fuel injections has already terminated, remains unburnt and reaches the exhaust system unchanged, thus increasing the hydrocarbons HC at the exhaust system, which, in turn, activate and increase the efficiency of the DeNox catalyst;
- the fuel pre-injection PRE - which, as stated, takes part in the combustion of the fuel injected during the main fuel injections - provides for reducing fuel ignition delay - i.e. the time interval between fuel injection into a cylinder during the main fuel injection MAIN1 and the actual start of the fuel combustion in the cylinder - thus reducing the combustion noise generated by the engine 2; and
- the fuel pre-injection PILOT provides for increasing the pressure in a cylinders at the end of the compression stroke, thus reducing engine start-up time, reducing the engine noise and smokiness during the engine warm-up, and increasing the engine torque at low engine speed.

According to one aspect of the present invention, at each engine cycle and in each cylinder 4 of engine 2, all six of the above fuel injections may be performed with the times indicated, or, depending on the objective of the fuel injection strategy, subgroups of the above fuel injections may be performed comprising at least the first main fuel injection MAIN1 and at least one further fuel injection selected from among the second fuel pre-injection PRE, the second main fuel injection MAIN2, and the first fuel post-injection AFTER.

If fewer than all six of the above fuel injections are performed, the timing conditions relative to the injection start engine angles of the fuel injections actually performed remain as indicated above, while the timing conditions relative to the delay or advance of the performed fuel injections with respect to the preceding fuel injections are as follows:
- in the absence of the second fuel pre-injection PRE, the advance of first fuel pre-injection PILOT indicated above is to be taken as referring to the first main fuel injection MAIN1, i.e. the first fuel pre-injection PILOT ends at least 280 µs before the first main fuel injection MAIN1 starts;
- in the absence of the second main fuel injection MAIN2, the delay of the first fuel post-injection AFTER indicated above is to be taken as referring to the first main fuel injection MAIN1, i.e. the first fuel post-injection AFTER starts at least 80 µs after the first main fuel injection MAIN1 ends, while the delay of the second fuel post-injection POST with respect to the first fuel post-injection AFTER remains as indicated above;
- in the absence of the first fuel post-injection AFTER, the delay of the second fuel post-injection POST indicated above is to be taken as referring to the second main fuel injection MAIN2, i.e. the second fuel post-injection POST starts at least 280 µs after the second main fuel injection MAIN2 ends; and
- in the absence of the second main fuel injection MAIN2 and the first fuel post-injection AFTER, the delay of the second fuel post-injection indicated above is to be taken as referring to the first main fuel injection MAIN1, i.e. the second fuel post-injection POST starts at least 280 µs after the first main fuel injection MAIN1 ends.

For each group of fuel injections performed, it is also possible to adjust the quantity of fuel injected in each multiple fuel injection.

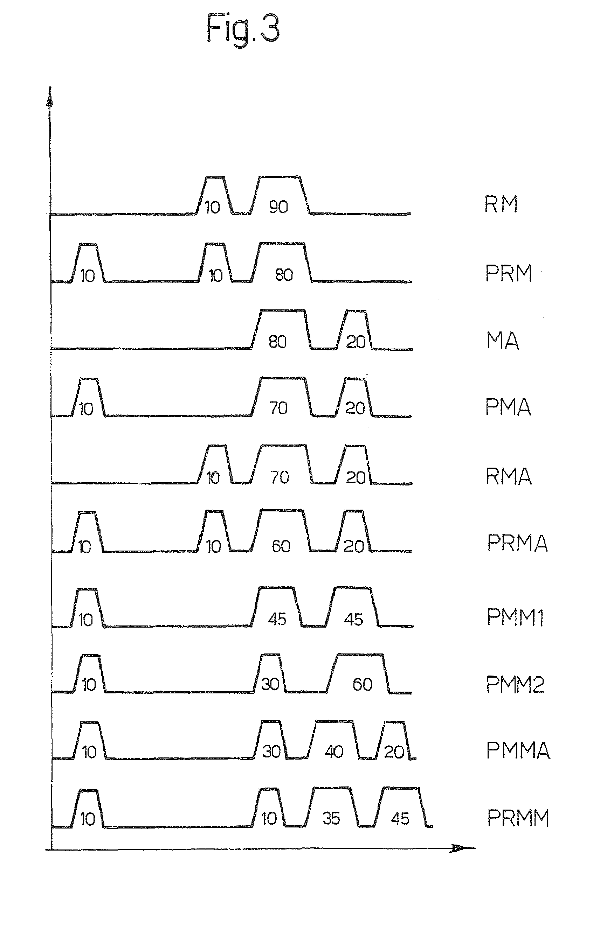

Purely by way of example, Figure 3 shows a few of the many strategies that can be implemented in each engine cylinder and during each engine cycle using only some of the fuel injections described above.

In particular, Figure 3 shows:
- a first strategy RM, which performs the fuel pre-injection PRE to inject 10% of the fuel, and the main fuel injection MAIN1 to inject 90% of the fuel;
- a second strategy PRM, which performs the fuel pre-injection PILOT to inject 10% of the fuel, the fuel pre-injection PRE to inject 10% of the fuel, and the main fuel injection MAIN1 to inject 80% of the fuel;
- a third strategy MA, which performs the main fuel injection MAIN1 to inject 80% of the fuel, and the fuel post-injection AFTER to inject 20% of the fuel;
- a fourth strategy PMA, which performs the fuel pre-injection PILOT to inject 10% of the fuel, the main fuel injection MAIN1 to inject 70% of the fuel, and the fuel post-injection AFTER to inject 20% of the fuel;
- a fifth strategy RMA, which performs the fuel pre-injection PRE to inject 10% of the fuel, the main fuel injection MAIN1 to inject 70% of the fuel, and the fuel post-injection AFTER to inject 20% of the fuel;
- a sixth strategy PRMA, which performs the fuel pre-injection PILOT to inject 10% of the fuel, the fuel pre-injection PRE to inject 10% of the fuel, the main fuel injection MAIN1 to inject 60% of the fuel, and the fuel post-injection AFTER to inject 20% of the fuel;
- a seventh strategy PMM1, which performs the fuel pre-injection PILOT to inject 10% of the fuel, the main fuel injection MAIN1 to inject 45% of the fuel, and the main fuel injection MAIN2 to inject 45% of the fuel;
- an eighth strategy PMM2, which performs the fuel pre-injection PILOT to inject 10% of the fuel, the main fuel injection MAIN1 to inject 30% of the fuel, and the main fuel injection MAIN2 to inject 60% of the fuel;
- a ninth strategy PMMA, which performs the fuel pre-injection PILOT to inject 10% of the fuel, the main fuel injection MAIN1 to inject 30% of the fuel, the main fuel injection MAIN2 to inject 40% of the fuel, and the fuel post-injection AFTER to inject 20% of the fuel; and
- a tenth strategy PRMM, which performs the fuel pre-injection PILOT to inject 10% of the fuel, the fuel pre-injection PRE to inject 10% of the fuel, the main fuel injection MAIN1 to inject 35% of the fuel, and the main fuel injection MAIN2 to inject 45% of the fuel.

Numerous fuel injection strategies may, of course, be devised, and numerous variations made of those described above. For example, three main fuel injections may be performed as opposed to two, or provision may be made for two successive fuel pre-injections PILOT as opposed to only one.

According to a further aspect of the present invention, the way in which the multiple fuel injections are controlled - by which is meant the number and type of fuel injections - varies as a function of the engine operating point, defined by the engine speed and torque, and by the operating conditions, e.g. engine temperature.

By way of example, the following is a description of one of the possible ways in which multiple fuel injections can be controlled as a function of the engine operating conditions, and which provides for performing the following fuel injection strategies:
- a first fuel injection strategy during engine start-up, and which provides for performing the first and second fuel pre-injections PILOT and PRE to reduce the engine start-up time and smokiness, and then the first main fuel injection MAIN1;
- a second fuel injection strategy when the exhaust gas temperature is below the catalysis temperature (i.e. at temperatures at which no reduction in nitric oxides is made by DeNox catalyst 12), and which provides for performing the second fuel pre-injection PRE to reduce noise, the first main fuel injection MAIN1, and the first fuel post-injection AFTER to reduce the amount of particulate matter produced;
- a third fuel injection strategy during the DeNox temperature emission cycle (i.e. when nitric oxides are reduced by DeNox catalyst 12), and which provides for performing the first fuel pre-injection PRE to reduce noise, the first and second main fuel injections MAIN1 and MAIN2 to reduce nitric oxides NOx, the first fuel post-injection AFTER to reduce the amount of particulate matter produced, and the second fuel post-injection POST to increase the efficiency of the DeNox catalyst;
- a fourth fuel injection strategy during the high-temperature emission cycle, and which provides for performing the second fuel pre-injection PRE to reduce noise, the first and second main fuel injections MAIN1 and MAIN2 to reduce nitric oxides NOx, and the first fuel post-injection AFTER to reduce particulate matter;
- a fifth fuel injection strategy during the pickup or warm-up stage, and which, in addition to the first main fuel injection MAIN1, also provides for performing the first and second fuel pre-injections PILOT and PRE to reduce noise and misfiring, i.e. combustion anomalies;
- a sixth fuel injection strategy during the high-torque, low-engine-speed stage, and which, in addition to the first main fuel injection MAIN1, also provides for performing the first and second fuel pre-injections PILOT and PRE to reduce noise and increase torque;
- a seventh fuel injection strategy in medium/high engine speed and load conditions and when driving along motorways, and which provides for performing the second fuel pre-injection PRE to reduce noise, and the first and second main fuel injections MAIN1 and MAIN2 to reduce consumption; and
- an eighth fuel injection strategy in maximum-power conditions, and which provides for performing the first fuel pre-injection PILOT to increase power, and the first main fuel injection MAIN1.

The advantages of the fuel combustion control method according to the present invention will be clear from the foregoing description.

In particular, the method according to the invention provides, on the one hand, for greatly reducing pollutant emissions and combustion noise, and, on the other, for improving the engine efficiency and performance and reducing the fuel consumption.

Moreover, implementing the fuel combustion control method according to the invention by means of a common-rail fuel injection system - which, as is known, provides for highly versatile, flexible use - not only enables the present invention to be used on any type of diesel engine, but also provides for optimum operation, in terms of emissions, performance and consumption, of the particular diesel engine to which the invention is applied.

Clearly, changes may be made to the control method as described and illustrated herein without, however, departing from the scope of the present invention, as defined in the appended claims.

## Claims

1. A method of controlling operation of a diesel engine (2) in at least one of the following engine operating conditions:
- start-up to reduce engine start-up time and misfiring;
- warm-up or pickup to reduce combustion noise instabilities; and
- high-torque and low-speed to reduce combustion noise and increase engine torque;
the diesel engine (2) being equipped with a common-rail fuel injection system (1) operable to perform multiple fuel injections into each engine cylinder (4);
the method comprising performing into an engine cylinder:
- a main fuel injection (MAIN1; MAIN2) around an engine end-of-compression top dead center;
- a first fuel pre-injection (PRE; MAIN1) before and so close to the main fuel injection (MAIN1; MAIN2) that the fuel injected during the first fuel pre-injection (PRE; MAIN1) takes part in the combustion of the fuel injected during the main fuel injection (MAIN1; MAIN2); and
- a second fuel pre-injection (PILOT; PRE) before the first fuel pre-injection (PRE; MAIN1).

2. The method of claim 1, wherein the second fuel pre-injection (PILOT) is performed so far from the main fuel injection (MAIN1) that the fuel injected during the second fuel pre-injection (PILOT) does not take part in the combustion of the fuel injected during the first fuel pre-injection (PRE) and the main fuel injection (MAIN1).

3. The method of claim 1, wherein the second fuel pre-injection (PRE) is performed so close to the main fuel injection (MAIN2) that the fuel injected during the second fuel pre-injection (PRE) takes part in the combustion of the fuel injected during the first fuel pre-injection (MAIN1) and the main fuel injection (MAIN2).

4. The method of any one of the foregoing claims, wherein the main fuel injection (MAIN1; MAIN2) starts at an engine angle which is mainly a function of engine speed and load.

5. The method of any one of the foregoing claims, wherein the main fuel injection (MAIN1; MAIN2) starts at an engine angle ranging between 30° before and 10° after the top dead center.

6. The method of any one of the foregoing claims, wherein the second fuel pre-injection (PILOT; PRE) starts at an engine angle between 60° before the top dead center and the top dead center.

7. The method of any one of the foregoing claims, wherein the first fuel pre-injection (PRE) and the second fuel pre-injection (PILOT) inject a smaller amount of fuel than the main fuel injection (MAIN1).
